# EUROPEAN PATENT SPECIFICATION

(11) **EP 1 335 318 B1**
(45) Date of publication and mention of the grant of the patent: **20.07.2005**
(21) Application number: 03250282.5
(22) Date of filing: 16.01.2003
(51) Int. Cl.: G06K 11/16, G06F 3/033

(54) **Touch screen detection apparatus, system and method**
Berührungsempfindlicher Bildschirm, System und Verfahren
Dispositif, système et methode de commande à écran tactile

(30) Priority: 17.01.2002 US 349688 P
(43) Date of publication of application: 13.08.2003
(73) Proprietor: Philipp, Harald, Southampton, Hampshire SO31 4RH (GB)
(72) Inventor: Philipp, Harald, Southampton, Hampshire SO31 4RH (GB)
(74) Representative: Haines, Miles John

(56) References cited:
- EP-A- 0 190 734
- US-A- 5 914 708
- US-B1- 6 297 811

## Description

### FIELD OF THE INVENTION

This invention relates to human interface devices and in particular, to capacitive touch screens, touch pads and similar sensing apparatus.

### BACKGROUND OF THE INVENTION

Capacitive touch screens are commonly used as pointing sensors to provide a man-machine interface for computer driven systems. The most common type of capacitive touch screen employs a thin deposition of clear conductive material such as Indium Tin Oxide (ITO) or Tin Oxide (SnO2) which forms a clear resistive sheet through which an image from an underlying cathode ray tube (CRT) or liquid crystal display (LCD) is visible. The capacitance of the touch can be detected relative to two transverse detection axes by one of several known detection arrangements.

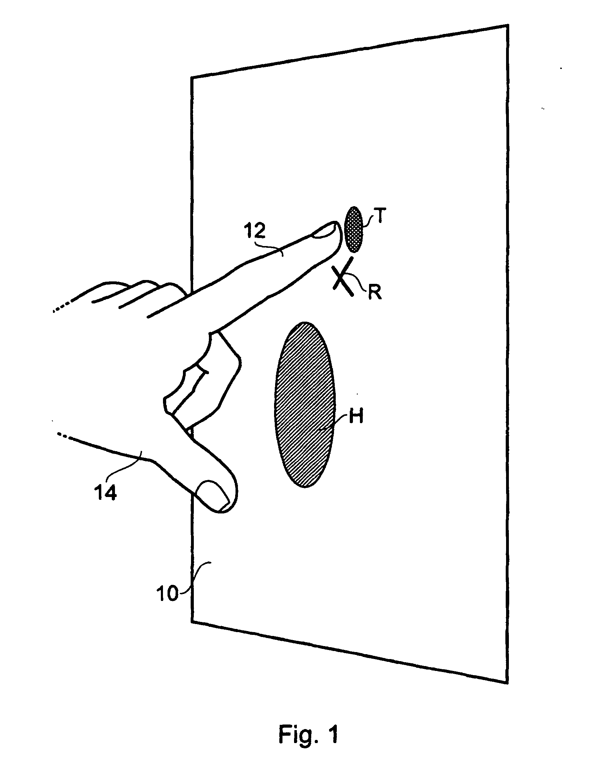

Capacitive touch screens are noted for being more environmentally robust than many competing solutions, although capacitive touch screens can suffer from an effect known as 'handshadow'. Generally speaking, the handshadow effect refers to errors associated with the undesired proximity detection of a portion of a relatively large object (such as a hand) comprising or associated with a smaller pointing portion or object (such as finger tip), where the smaller pointing portion is closer to a touch sensing surface than is the rest of the object. Referring to Figure 1 of the accompanying drawings, the location at which the capacitive touch screen 10 is touched by a user's finger 12 is ideally detected by the associated detection apparatus as being at the actual center of the area of contact under the finger, depicted as a region T in Figure 1. However, because the capacitive touch screen also responds to the capacitance of objects other than the finger in the vicinity of the screen as a result of capacitive coupling at a distance (as opposed to touch coupling), the detection apparatus also picks up a signal from the rest of the operator's hand 14, and associates with it a 'handshadow' depicted as region H in Figure 1. As a result of this, the detected touch location may correspond to a location R which is offset to a greater or lesser extent from the center of the actual area of contact T. The orientation and size of the operator's hand will have a bearing on the extent of this effect. Moreover, the closer the hand is to the screen and the more offset it is from location T, the greater the error.

The handshadow effect is currently generally overcome in the industry by placing the conductive sensing layer on the user-side surface of the glass screen, and protecting it with a thin dielectric overcoat. This arrangement provides for extremely strong signals because of the close distance between the fingertip and the conductive layer, which leads to a high level of spot capacitance at location T. The ratio of the distance between the hand and the sensing layer to the distance between the fingertip and the sensing layer approaches infinity, so that the induced capacitance due to the hand, relative to the induced capacitance due to the fingertip, is miniscule and the positional error term is negligible. The considerable disadvantage of this method is that the conductive layer is very fragile owing to the need for a very thin overcoat, so that sharp objects, cigarettes, etc. can damage the conductive sensing layer.

### SUMMARY OF THE INVENTION

One of the objects of the invention to reduce or remove the handshadow effect by compensating for the detection error that arises during operation of conventional capacitive touch screens. In preferred embodiments of the invention, the handshadow effect is substantially reduced while using a sensor having a conductive layer disposed behind a relatively thick, solid layer, which may be glass.

One aspect of the invention is that it provides a system as defined in appended claim 5.

Preferred embodiments of the invention operate by using a history profile of data derived from the screen both just prior to, and just after the touch is detected. Those data are processed to either correct the raw signals occurring during touch, or processed to determine a new final value based on regression techniques or other forms of predictive mathematics. The actual processing used to arrive at the corrected touch location can take many forms, and the invention should be understood as to not be limited to any particular method of computation. The 'data derived from the screen' noted above can be either raw signals or partially processed signals.

Another aspect of the invention is that it provides apparatus for determining a set of coordinates of a point of closest approach of a pointing portion of an object to a capacitive touch screen, where the pointing portion of the object is closer to the screen than is the rest of the object, the apparatus comprising signal acquisition circuitry, a memory, detection determination logic circuitry, and signal processing circuitry. The signal acquisition circuitry is arranged to receive a temporal sequence of sets of signals from the capacitive touch screen and to supply a corresponding temporal sequence of sets of digital signals as an output, where each of the sets of digital signals has a respective associated magnitude. The memory, which has the temporal sequence of sets of digital signals as an input, is used for storing at least one of the sets of digital signals. The detection determination logic circuitry, which also has the temporal sequence of sets of digital signals as an input, is arranged to have a trigger signal as an output when the magnitude associated with one of the sets of digital signals is not at least a selected amount greater than the magnitude associated with the immediately previous set of digital signals. That is, as long as the magnitude of signals increases, there is no trigger, but when the signals rise to a plateau (i.e., when the magnitude associated with one of the sets of digital signals is not at least a selected amount greater than the magnitude associated with the immediately previous set of digital signals of the temporal sequence and when the magnitude of subsequent sets of signals also varies by less than the selected amount), or begin falling from a maximum value, a trigger signal is output. The signal processing circuitry has inputs from both the memory and from the detection determination logic circuitry and acts responsive to the trigger signal to calculate, from the set of digital signals that is not at least a selected amount greater than the magnitude associated with the immediately previous set of digital signals (i.e. from the signal that is either a local maximum value or one that initiates a signal plateau region) and from at least one other set of digital signals stored in the memory, the coordinates of the point of closest approach.

It should be appreciated that preferred embodiments of the invention provide a method of two-dimensional (XY) data correction applicable to other than touch screens. For example, the invention can also be applied to touch pads or tablets, such as computer 'mouse' touch pads and the like, and the use of the word 'touch screen' throughout this specification is intended to imply all other such XY implementations, applications, or modes of operation.

Another aspect of the invention is that it provides a method for determining coordinates of a point of closest approach of a pointing portion of an object to a capacitive touch screen, where the pointing portion is closer to the screen than is the rest of the object the method comprising the sequentially executed steps of: 1) acquiring a time sequence of sets of touch screen signals from which respective coordinates can be calculated, the sequence comprising at least two sets, where each of the sets has a respective associated magnitude. 2) Storing at least one of the sets of signals in a memory. 3) Determining if the magnitude associated with the currently acquired set of signals is at least a selected amount greater than the magnitude associated with any one of the sets of signals stored in the memory, and, if so, continuing to acquire additional sets of signals. If not, determining that the pointing portion of the object has attained the position of closest approach and then calculating, from the currently acquired set of signals and at least one of the sets of signals in the memory, the coordinates of the position of closest approach.

In one processing methodology, the determination of a corrected touch location is made by an extrapolation of uncorrected data derived from the raw signals occurring prior to a pointing event or a near-touch up until a subsequent time when the finger would have actually touched the sensing layer to generate a strong signal.

In another processing methodology, the determination of corrected touch location is made by recording the value of the raw signals just prior to touch, and subtracting or otherwise algebraically correcting the signals found after touch by recourse to the pre-touch signals, and then determining a corrected touch location from the corrected raw signals. This method relies on the fact that the signals just prior to touch are largely handshadow signals, and the signal acquired after touch are a combination of handshadow signals and signals from the fingertip area. A buffer memory is used to record the raw signals.

In the above methodologies the buffer memory should record one or more signal sets over a period of time in advance of the detection of touch. The memory can be used to store either raw signal sets or partially processed signals, e.g., signals reduced to an XY location plus a signal strength value generally designated as Z.

The detection apparatus used in the system of the invention may be implemented in a microcontroller or computer, or in hardwired computational logic, or by using analog computation (e.g. an analog computer or dedicated analog circuitry).

Although it is believed that the foregoing recital of features and advantages may be of use to one who is skilled in the art and who wishes to learn how to practice the invention, it will be recognized that the foregoing recital is not intended to list all of the features and advantages, Moreover, it may be noted that various embodiments of the invention may provide various combinations of the hereinbefore recited features and advantages of the invention, and that less than all of the recited features and advantages may be provided by some embodiments.

### BRIEF DESCRIPTION OF THE DRAWINGS

In order that the invention may be more fully understood, embodiments of the detection apparatus in accordance with the invention will now be described with reference to the accompanying drawings.
Figure 1 is partly schematic perspective view depicting the presence of handshadow during operation of a touch screen.
Figure 2 is a block diagram of one embodiment of a system of the invention.
Figure 3 is a block diagram of a second embodiment of a system of the invention.
Figure 4 is a graph showing a typical plot of signal strength as a function of time obtained from a touch screen during an exemplary touch incident.
Figure 5 is a three-dimensional graph showing an exemplary time series of signal strength in the XY plane as a hand approaches the touch screen.
Figure 6 is a graph showing an exemplar plot of signal strength as a function of time obtained from a touch screen during an interval in which the screen is not touched, but is merely pointed at.
Figure 7 is a flowchart showing signal processing flow to implement one embodiment of the invention.

### DETAILED DESCRIPTION OF A PREFERRED EMBODIMENT

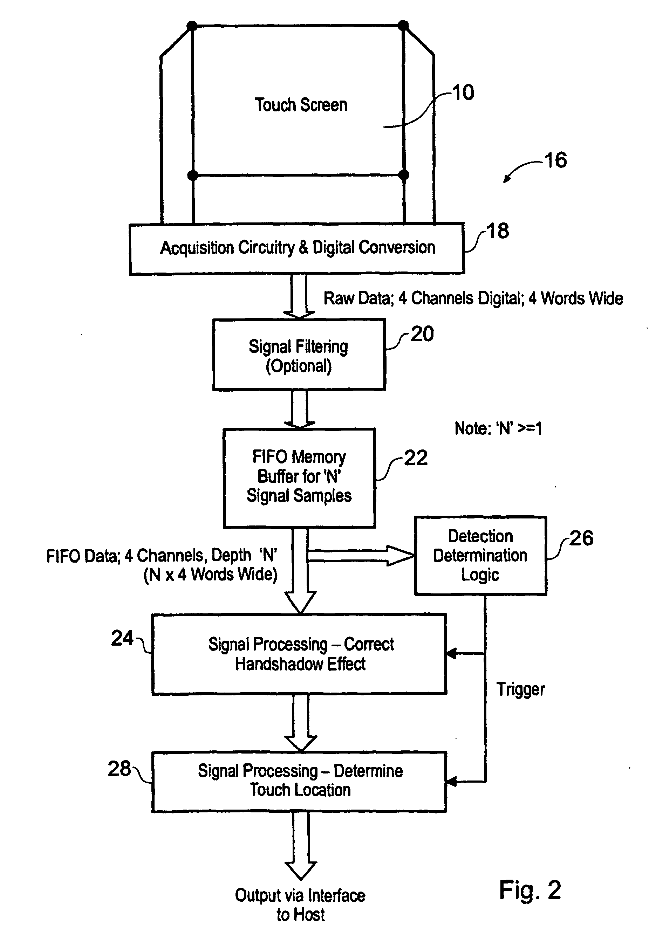

A touch detection apparatus 16 in accordance with a first embodiment of the invention, as shown in Figure 2, comprises a capacitive touch screen 10 comprising a transparent conductive layer capacitively coupled to a user's finger 12. As is conventional in the touch screen art, connections from the screen 10 are led to acquisition circuitry 18 for conversion of the signals to digital form. There is normally a set of four raw digital signals at the output of screen 10 that are acquired simultaneously. This signal set represents the capacitive signals X-X', Y-Y' received from the connections to the screen 10.

The output of the acquisition circuitry 18 is optionally led to a signal filtering means 20 to remove signal noise which may be present and which may be caused by external electric or magnetic fields.

In apparatus of the invention, the outputs of the filter 20 (or of the acquisition circuit 18 if no filter 20 is used) are supplied to a digital memory 22, which is preferably configured as a FIFO (first in first out) type memory (or similarly, as a circular buffer or data array), This memory is depicted as being of length N, and is used to record unprocessed data in a time-sequential fashion over two or more sample sets. N can be of length 1 to some higher integer n. If N=1, the processing means 24 must also take input signals directly from the acquisition circuitry 18 or the filter means 20 in order to be able to compare at least two time-sequential measurements. Detection determination logic 26 determines from the contents of the memory 22 (or one record from the memory 22 and a contemporary set of signals from the signal acquisition circuits 18) whether a user's touch on the screen has occurred. Signal processing means 24 uses mathematical means to correct the data by removing the signal associated with the handshadow effect, and thus provides an output to further signal processing means 28 which computes the actual corrected location of touch. The circuitry depicted in blocks 24 and 28 is preferably configured to operate only when a touch has been detected by the detection logic 26 so as to eliminate the need for continuous computation and to provide a valid output only when the screen is actually touched.

The signal sets, or samples, recorded by the memory 22 extend over a period of total elapsed time which may encompass anywhere between one millisecond of elapsed time to one second of elapsed time, the actual amount being determined through experimentation and being dependent at least in part on the application, but which would typically be about 50 to 100 milliseconds. Moreover, it may be noted that each of the actual records stored in the memory may comprise a set of raw signals or processed data representative thereof. Regardless of the format, the data stored in the memory represent a time sequence of one or more sets of touch screen signals from which a respective set of touch position coordinates can be calculated and with which a respective magnitude is associated.

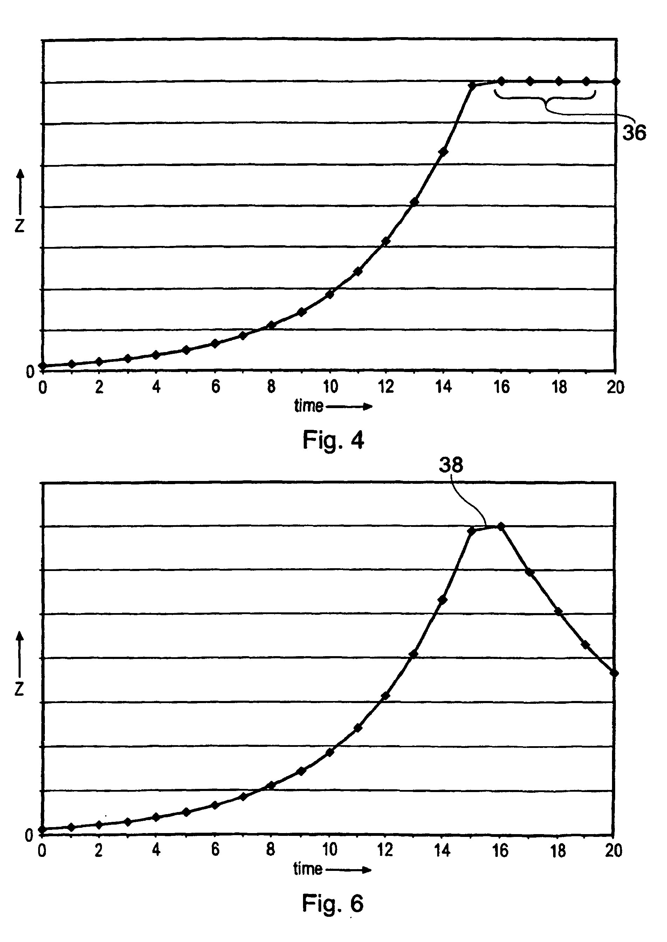

Detection determination logic 26 can readily determine the moment of touch by examining the strength of the signal data contained in memory 22, and by waiting for the signal amplitude to rise to a plateau 36 as shown in Figure 4.

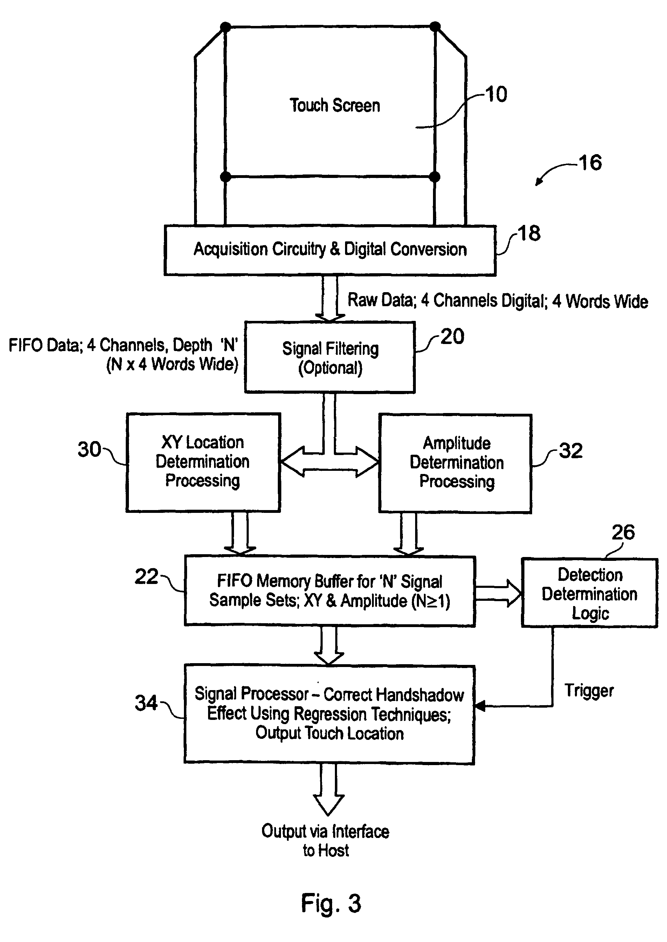

A second embodiment of a touch detection apparatus 16 in accordance with the invention, as shown in Figure 3, comprises a capacitive touch screen 10 comprising a transparent conductive layer capacitively coupled to a user's finger. Connections from the screen 10 are led to acquisition logic 18 for conversion of the signals to digital form. There are normally four raw digital signals X-X', Y-Y' at the output of the screen 10 at any given time and represent the capacitive signals received from the connections to the screen 10. The output of the acquisition circuit 18 is optionally led to a signal filtering means 20 to remove signal noise which may be caused by external electric or magnetic fields. The outputs of the filter 20 (or of the acquisition circuitry 18 if the filter circuit 20 is absent) are led to a means for determining apparent touch location 30 and also to a means for determining signal strength 32. The uncorrected XY coordinate location and the signal strength, which is normally just the sum of the four raw signals from the acquisition logic 18, are time-correlated together and fed to a digital memory 22 that is preferably configured as a FIFO (first in first out) type buffer memory (or similar, such as a circular buffer) of length N, where N >=1, to record the partially processed data in a time-sequential fashion. If N=1, the subsequent processing block 34 will also require access to data directly derived from the acquisition circuitry, in order to have a plurality of data sets to operate on. Detection determination logic 26 determines from the contents of the memory 22 whether a user's touch on the screen has occurred. Signal processing means 34 uses mathematical processing such as regression or another form of extrapolation to correct the data contained in the memory 22 by projecting the signal forward in time to a point located in signal space comparable to that which would have occurred if the touch had been directly on the sensing layer. In this embodiment the processing means 34 is preferably configured to operate only when a touch has been detected by the detection logic 26, so as to reduce the need for continuous computation.

As noted above, it is possible to reduce the memory buffer size to one location, by storing in it the immediately preceding value prior to touch. In this case, the second data set can be the latest value directly arising from acquisition circuitry. Similarly, the memory can hold a single data set which is a running average of signals or their derivates, in a manner similar to a IIR filter, thus also alleviating the need for signal filtering blocks 20.

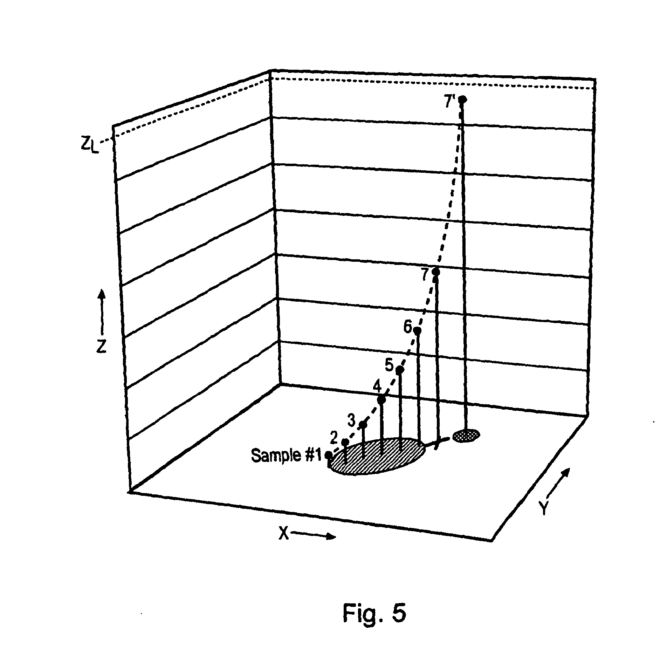

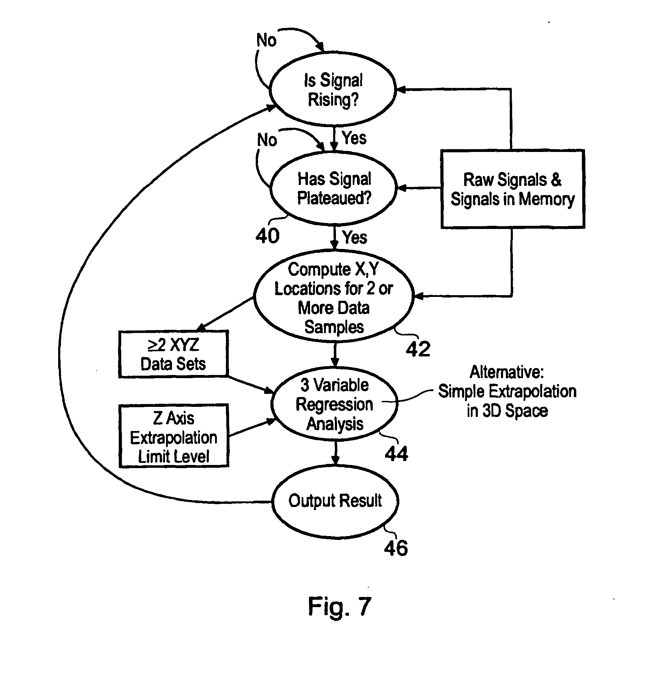

The method and circuitry can also be used to determine 'almost touch' in the sense that a finger approaching a screen or tablet that does not actually touch the surface of the screen or tablet, but merely points to a screen location at close range, e.g., a distance of up to a few centimeters. If the finger approaches near enough, a plot of the total signal amplitude as a function of time will either appear like that shown in Figure 4 (if the finger lingers at the 'near-touch' location), or possibly like the maximum 38 shown in Figure 6 if the finger is brought close to the screen and then withdrawn. The XYZ signal profile will appear similar to that of Figure 5. The signals are therefore sufficient to determine an instant of closest approach of the pointing portion, whether or not that closest approach comprises an actual touch, and to derive from the signal history a corrected or extrapolated signal indicative of the coordinates of a point of closest proximity.

It is thus possible to create a 'touch' screen or 'touch' pad which does not actually require touch, a considerable advantage in applications where hygiene is paramount or where users do not desire to touch a screen, for example, if their hands are dirty. Examples of this can occur in medical applications like hospitals, or in food service industries or even in home kitchens.

In the prior descriptions involving actual touch, the procedures for XY correction remain identical; it is only necessary to substitute the words 'almost touch' or 'point' for the words 'touch' or 'touched' in the method and apparatus descriptions to achieve the desired effect. It should thus be understood therefore that the invention also incorporates the detection and correction of 'almost touch' or 'pointing at'.

In one processing methodology, the determination of corrected touch location is made by an extrapolation of uncorrected XYZ (Z= signal strength) data derived from the raw signals occurring prior to and during touch, to a later (forward) time when the finger would have actually touched the sensing layer to generate a strong signal had it been able to do so. A flow chart of this method is shown in Figure 7 in which signals as well as at least one signal from memory are analyzed until a plateau or maximum is reached (Step 40). The uncorrected X and Y coordinates, corresponding to the touch location R of Fig. 1, are then calculated from the touch screen signals (Step 42). A regression analysis (Step 44) is then carried out on two or more XYZ data sets to provide a corrected position, corresponding to the point T in Fig. 1, that is then output (Step 46). As noted, the processing can be accomplished via standard regression methods, or by the use of similar extrapolation techniques.

This methodology usually requires that the signals be preprocessed to obtain the apparent XY locations of the pre-touch and post-touch signals as well as the corresponding Z signal strengths. At least one of these XYZ data sets must be stored in a buffer memory, which is accessed by the correction processing algorithm to arrive at a corrected output value. Because the correction processing algorithm requires at a minimum two such XYZ data sets, a second such set can be derived directly from the screen signals without the aid of intervening memory. Appendix A shows one algorithm that can be used to determine XY location based on the four signals arising from the corners of a capacitive touch element. Figure 5 shows seven time-sequential signals processed to the level of XY location and Z signal strength, leading up to a touch detection signal at sample 7. An extrapolation of two or more of these data sets can be made to find the 'final' XY location value at a designated suitable Z signal strength where Z is much larger than the strength of the handshadow signal component, e.g. at computed location 7'. If the fingertip were allowed to continue through the glass and onto the conductive sensing plane, the signal strength would be seen to grow exponentially while the computed XY location would be asymptotic to the final ideal limit.

There may also be a plurality of data stored in the electronic memory on which the determination step (e) relies. The stored datum or data may be either the same as the sensing signal or processed therefrom, for example raw, filtered, or reduced to an XY location plus signal strength, or other such signal representation.

The signal processing means may use data directly derived from the output signals in addition to data stored in the memory means.

Although the present invention has been described with respect to several preferred embodiments, many modifications and alterations can be made without departing from the invention. Accordingly, it is intended that all such modifications and alterations be considered as within the scope of the invention as defined in the attached claims.

### Appendix A - Algorithm to compute XY touch location based on signals from a 4-connection capacitive touch element

// calculate transform coeficients a3, b3, a4, b4, a1', b1', a2', b2'
procedure Tquantum_touchscreen_cal.verify_calibration;
var
fault: Boolean ;
j : SmallInt ;
begin
fault := False ;
if ((cal_data[1].X >= cal_data[2].X) or (cal_data[1].X >= cal_data[3].X) or (cal_data[4].X >= cal_data[2].X) or (cal_data[4].X >= cal_data[3].X)) then fault := True ;
if ((cal_data[3].Y >= cal_data[1].Y) or (cal_data[3].Y >= cal_data[2].Y) or (cal_data[4].Y >= cal_data[1].Y) or (cal_data[4].Y >= cal_data[2].Y)) then fault := True ;
for j := 1 to 4 do
begin
if ((cal_data[j].X = NOT_IN_CAL) or (cal_data[j].Y = NOT_IN_CAL)) then fault := True ;
end;
if (not fault) then
begin
cal_ok := True ; // mark as valid and set up adjustments
a3 :=(cal_data[3].Y - cal_data[4].Y)/(cal_data[3].x - cal_data[4].x);
b3 := cal_data[3].Y - (a3 * cal_data[3].x);
a4 := (cal_data[4].X - cal_data[1].X)/(cal_data[4].Y - cal_data[1].Y);
b4 := cal_data[4].X - (a4 * cal_data[4].Y);
for j := 1 to 4 do
begin
cal_data_x[j] := cal_data[j].X - ((a4 * cal_data[j].Y) + b4);
cal_data_y[j] := cal_data[j].Y - ((a3 * cal_data[j].X) + b3);
end ;
a1_:= (cal_data_y[1] - cal_data_y[2])/(cal_data_x[1] - cal_data_x[2]);
b1_:= cal_data_y[1] - (a1_* cal_data_x[1]);
a2_:= (cal_data_x[2] - cal_data_x[3])/(cal_data_y[2] - cal_data_y[3]);
b2_:= cal_data_x[2] - (a2_ * cal_data_y[2]);
end
else
cal_ok := False ; // mark as invalid - zero adjustments
end;
// perform transform (1 and 2) of coarse data
function Tquantum_touchscreen_cal.do_transform(position_now : TPoint ; maxx : SmallInt ; maxy : SmallInt) : TPoint ;
var
newx, newy : Extended ;
newpos : TPoint ;
begin
if (cal_ok) then // proceed with transformation
begin // compensate for plot scale change
newx := (maxx * (position_now.X - (position_now.Y * a4) - b4))/(a2_* (position_now.Y - (a3 * position_now.X)) + b2_);
newpos.x := floor(newx);
newy := (maxy * (position_now.y - (position_now.x * a3) - b3))/(a1_* (position_now.x - (a4 * position_now.y)) + b1_);
newpos.y := floor(newy);
if (newpos.x < 0) then
newpos.x := 0;
if (newpos.y < 0) then
newpos.y := 0;
if (newpos.x > maxx) then
newpos.x := maxx;
if (newpos.y > maxy) then
newpos.y := maxx;
end
else
begin
newpos.X := position_now.X ;
newpos.Y := position_now.Y ;
end ;
do_transform := newpos ;
end ;

### REFERENCE NUMERALS

- T: actual touch spot
- R: uncorrected touch spot
- H: handshadow
- 10: touch screen
- 12: pointing portion of object (finger)
- 14: rest of object (hand)
- 16: apparatus of the invention
- 18: acquisition circuitry
- 20: filters
- 22: memory
- 24: signal processing, correct handshadow (Fig. 2)
- 26: detection determination logic
- 28: signal processing, determine T (Fig. 2)
- 30: XY location processing (Fig. 3)
- 32: amplitude detection processing (Fig. 3)
- 34: signal processing, regression (Fig. 3)
- 36: amplitude plateau (Fig. 4)
- 38: maximum (Fig. 6)
- 40: watch for plateau
- 42: calculate uncorrected X,Y
- 44: regression analysis
- 46: output

## Claims

1. A method for determining coordinates of a point of closest approach of a pointing portion of an object to a capacitive touch screen, the pointing portion being closer to the screen than the rest of the object, the method comprising the sequentially executed steps of:
a) acquiring a time sequence of sets of touch screen signals from which respective coordinates can be calculated, the sequence comprising a currently acquired set and at least one other set, each of the sets having a respective magnitude associated therewith;
b) storing the at least one other set of signals in a memory;
c) determining if the magnitude associated with the currently acquired set of signals is at least a selected amount greater than the magnitude associated with any set of signals stored in the memory;
d) if so, continuing to acquire additional sets of signals in the time sequence thereof; and
e) if not, determining that the pointing portion of the object has attained the position of closest approach and then calculating, from the currently acquired set of signals and at least one other of the sets of signal, the coordinates of the position of closest approach.

2. The method of Claim 1 wherein, in step d), when each additional set of signals is acquired, the immediately previously acquired set of signals is stored in the memory.

3. The method of Claim 1 or 2 wherein the calculation in step e) comprises a regression analysis.

4. The method of Claim 1, 2 or 3 wherein the calculation in step e) comprises an extrapolation

5. A system for correcting a set of measured coordinates of a point of closest approach of a pointing portion of an object to a capacitive touch screen, the pointing portion of the object being closer to the screen than the rest of the object, the system comprising:
circuitry for generating, from a temporal sequence of outputs from the touch screen, a corresponding temporal sequence of records, each record representative of a respective set of uncorrected coordinates of the object and of a respective distance of approach of the object;
a memory for storing a temporal sequence of the records;
a first algorithm for comparing the respective distances of approach associated with two or more of the records and for determining if the magnitude associated with a currently acquired set of records is not at least a selected amount greater than the magnitude associated with any other set of records stored in the memory to thereby select the record having a distance of closest approach associated therewith;
a second algorithm for calculating, from the respective uncorrected set of coordinates associated with the record having the distance of closest approach and from at least one other record stored in the memory, a correction that, when applied to the uncorrected coordinates associated with the record having the distance of closest approach, yields a set of corrected coordinates; and
a computer for executing at least the first and second algorithms and for supplying the set of corrected coordinates as an output.

6. The system of Claim 5 wherein the circuitry for generating the plurality of records comprises signal filtering means.

7. The system of Claim 5 or 6 wherein the circuitry for generating the plurality of records comprises XY location determination circuitry and amplitude determination circuitry.

8. The system of any one of Claims 5 to 7 wherein the second algorithm comprises a regression analysis.

9. Apparatus for determining a set of coordinates of a point of closest approach of a pointing portion of an object to a capacitive touch screen, the pointing portion of the object being closer to the screen than the rest of the object, the apparatus comprising:
signal acquisition circuitry for receiving a temporal sequence of sets of analog signals from the capacitive touch screen and for supplying as an output a corresponding temporal sequence of sets of digital signals, each of the sets of digital signals having a respective magnitude associated therewith;
a memory for receiving the temporal sequence of sets of digital signals and for storing at least one of the sets of digital signals;
detection determination logic means having the temporal sequence of sets of digital signals as an input, the detection determination logic providing a trigger signal as an output when the magnitude associated with one of the sets of digital signals is not at least a selected amount greater than the magnitude associated with the immediately previous set of digital signals in the temporal sequence thereof; and
signal processing means having respective inputs from the memory and from the detection determination logic means, the signal processing means acting responsive to the trigger signal to calculate, from the set of digital signals that is not at least a selected amount greater than the magnitude associated with the immediately previous set of digital signals, and from at least one other set of digital signals stored in the memory, the coordinates of the point of closest approach.

10. The apparatus of Claim 9 wherein a microcontroller comprises the detection determination logic means and the signal processing means.

11. The apparatus of Claim 9 or 10 wherein the detection determination logic means and the signal processing means comprise respective hardwired logic computation circuits.

12. The apparatus of Claim 9, 10 or 11 wherein an analog computer comprises the detection determination logic means and the signal processing means.

## Patentansprüche

1. Verfahren zum Bestimmen der Koordinaten eines Punkts der nächsten Annäherung eines Zeigeabschnittes eines Objektes zu einer kapazitiven Touch-Screen, wobei der Zeigeabschnitt näher an dem Schirm ist als der Rest des Objektes, wobei das Verfahren die sequentiell ausgeführten Schritte aufweist:
a) Umfassen einer Zeitsequenz von Sätzen von Touch-Screen-Signalen, von denen die entsprechenden Koordinaten berechnet werden können, wobei die Sequenz einen gegenwärtig erfaßten Satz und zumindest einen anderen Satz aufweist, wobei jeder der Sätze eine entsprechende Größe bzw. einen Größenwert, die hiermit verknüpft ist, hat,
b) Speichern des zumindest einen anderen Satzes von Signalen in einem Speicher,
c) Bestimmen, ob die Größe, die mit dem gegenwärtig erfaßten Satz aus Signalen verknüpft ist, zumindest eine ausgewählte Menge größer ist als die Größe, die mit irgendeinem Satz aus Signalen, die in dem Speicher abgelegt sind, verknüpft sind,
d) falls dies der Fall ist, Fortsetzen der Erfassung zusätzlicher Sätze von Signalen in der Zeitsequenz, und
e) falls dies nicht der Fall ist, Bestimmen, daß der Zeigeabschnitt des Objektes die Position der nächsten Annäherung erreicht hat, und dann Berechnen aus dem gegenwärtig erfaßten Satz von Signalen und zumindest einem anderen der Sätze von Signalen die Koordinaten der Position der nächsten Annäherung.

2. Verfahren nach Anspruch 1, bei dem in Schritt d), wenn jeder zusätzliche Satz von Signalen erfaßt wird, der unmittelbar vorherige erfaßte Satz von Signalen im Speicher abgelegt wird.

3. Verfahren nach Anspruch 1 oder 2, bei dem Berechnung in Schritt e) eine Regressionsanalyse aufweist.

4. Verfahren nach Anspruch 1, 2 oder 3, bei dem die Berechnung in Schritt e) eine Extrapolation aufweist.

5. System zum Korrigieren eines Satzes von gemessenen Koordinaten eines Punktes der nächsten Annäherung eines Zeigeabschnittes eines Objektes zu einer kapazitiven Touch-Screen bzw. einem kapazitiven berührungsempfindlichen Bildschirm, wobei der Zeigeabschnitt des Objektes näher an dem Schirm ist als der Rest des Objektes, wobei das System aufweist:
einen Schaltkreis für das aus einer temporären Sequenz von Ausgangswerten von der Touch-Screen Erzeugen einer entsprechenden temporären Sequenz von Einträgen, wobei jeder Eintrag einen entsprechenden Satz von nicht korrigierten Koordinaten des Objektes und einen entsprechenden Abstand der Annäherung des Objektes repräsentiert,
einen Speicher für das Ablegen einer temporären Sequenz der Einträge,
einen ersten Algorithmus für das Vergleichen der entsprechenden Abstände der Annäherung, die mit zwei oder mehreren der Einträge verknüpft ist und für das Bestimmen, ob die Größe, die mit einem gegenwärtig erfaßten Satz von Einträgen verknüpft ist, nicht um zumindest eine ausgewählte Menge größer ist als die Größe, die mit irgendeinem anderen Satz von Einträgen, der im Speicher abgelegt ist, verknüpft ist, um hierdurch den Eintrag mit einem Abstand der nächsten Annäherung, der hiermit verknüpft ist, auszuwählen,
einen zweiten Algorithmus für das Berechnen aus dem jeweiligen nicht korrigierten Satz von Koordinaten, der mit dem Eintrag mit dem Abstand der nächsten Annäherung verknüpft ist, und von zumindest einem anderen Eintrag, der im Speicher abgelegt ist, einer Korrektur, die, wenn sie an die nicht korrigierten Koordinaten, die mit dem Eintrag mit dem Abstand der nächsten Annäherung verknüpft sind, angewendet wird, zu einem Satz von korrigierten Koordinaten führt, und
einen Computer für das Ausführen von zumindest dem ersten und dem zweiten Algorithmus und für das Liefern des Satzes von korrigierten Koordinaten als eine Ausgabe.

6. System nach Anspruch 5, bei dem der Schaltkreis für das Erzeugen der Mehrzahl von Einträgen Signalfiltereinrichtungen aufweist.

7. System nach Anspruch 5 oder 6, bei dem der Schaltkreis für das Erzeugen der Mehrzahl von Einträgen einen XY-Lokalisierungsbestimmungsschaltkreis und einen Amplitudenbestimmungsschaltkreis aufweist.

8. System nach einem der Ansprüche 5 bis 7, bei dem der zweite Algorithmus eine Regressionsanalyse aufweist.

9. Vorrichtung für das Bestimmen eines Satzes von Koordinaten eines Punktes der nächsten Annäherung eines Zeigeabschnittes eines Objektes an einen berührungsempfindlichen Schirm, wobei der Zeigeabschnitt des Objektes näher an dem Schirm ist als der Rest des Objektes, wobei die Vorrichtung aufweist:
einen Signalerfassungsschaltkreis für das Empfangen einer temporären Abfolge von Sätzen analoger Signale von dem berührungsempfindlichen Bildschirm und für das Liefern einer entsprechenden temporalen Sequenz von Sätzen von digitalen Signalen als eine Ausgabe, wobei jeder der Sätze von digitalen Signalen eine entsprechende hiermit verknüpfte Größe hat,
einen Speicher für das Empfangen der temporären Sequenz von Sätzen von digitalen Signalen und für das Ablegen von zumindest einem der Sätze von digitalen Signalen,
eine Erfassungsbestimmungslogikeinrichtung mit der temporären Sequenz von Sätzen von digitalen Signalen als Eingangswert, wobei die Erfassungsbestimmungslogik ein Triggersignal als Ausgang liefert, wenn die Größe, die mit einem der Sätze von digitalen Signalen verknüpft ist, nicht um zumindest eine ausgewählte Menge größer als die Größe ist, die mit dem unmittelbar vorherigen Satz von digitalen Signalen in der temporären Sequenz hiervon verknüpft ist, und
eine Signalverarbeitungseinrichtung mit entsprechenden Eingängen bzw. Eingaben von dem Speicher und von der Erfassungsbestimmungslogikeinrichtung, wobei die Signalverarbeitungseinrichtung auf das Triggersignal reagiert, um aus dem Satz von digitalen Signalen, der nicht zumindest eine ausgewählte Menge größer ist als die Größe, die mit dem unmittelbar vorherigen Satz von digitalen Signalen verknüpft ist, und von zumindest einem anderen Satz von digitalen Signalen, die im Speicher abgelegt sind, die Koordinaten des Punktes der nächsten Annäherung zu berechnen.

10. Vorrichtung nach Anspruch 9, bei der ein Mikrokontroller die Detektionsbestimmungslogikeinrichtung und die Signalverarbeitungseinrichtung aufweist.

11. Vorrichtung nach Anspruch 9 oder 10, bei der die Erfassungsbestimmungslogikeinrichtung und die Signalverarbeitungseinrichtung entsprechende verdrahtete logische Berechnungsschaltkreise aufweisen.

12. Vorrichtung nach Anspruch 9, 10 oder 11, bei der ein Analogcomputer die Erfassungsbestimmungslogikeinrichtung und die Signalverarbeitungseinrichtung aufweist.

## Revendications

1. Procédé pour déterminer des coordonnées d'un point d'approche au plus près d'une partie de pointage d'un objet par rapport à un écran tactile capacitif, la partie de pointage étant plus proche de l'écran que le reste de l'objet, le procédé comprenant les étapes séquentiellement exécutées ;
a) d'acquisition d'une séquence temporelle d'ensembles de signaux d'écran tactile à partir desquels des coordonnées respectives peuvent être calculées, la séquence comprenant un ensemble en cours d'acquisition et au moins un autre ensemble, chacun des ensembles ayant une magnitude respective qui lui est associés ;
b) de stockage de l'au moins un autre ensemble de signaux dans une mémoire ;
c) de détermination si la magnitude associée avec l'ensemble de signaux an cours d'acquisition est au moins une quantité sélectionnée supérieure à la magnitude associée avec un ensemble quelconque de signaux stockés dans la mémoire ;
d) si cela est bien le cas, de continuation d'acquérir des ensembles supplémentaires de signaux dans la séquence temporelle de ceux-ci ; et
e) ci cela n'est pas le cas, de détermination que la partie de pointage de l'objet a atteint la position du passage le plus proche, puis de calcul, à partir de l'ensemble de signaux en cours d'acquisition et d'au moins un autre parmi les ensembles de signaux, des coordonnées de la position du passage le plus proche.

2. Procédé selon la revendication 1 dans lequel, dans l'étape (d), lorsque chaque ensemble supplémentaire de signaux est acquis, l'ensemble de signaux qui est acquis immédiatement auparavant est stocké dans la mémoire.

3. Procédé selon la revendication 1 ou 2 dans lequel le calcul effectué dans l'étape (e) comporte une analyse de régression.

4. Procédé selon la revendication 1, 2 ou 3 dans lequel le calcul effectué dans l'étape (e) comporte une extrapolation.

5. Système pour corriger un ensemble de coordonnées mesurées d'un point du passage le plus proche d'une partie de pointage d'un objet par rapport à un écran tactile capacitif, la partie de pointage de l'objet étant plus proche de l'écran que le reste de l'objet, le système comprenant :
des circuits servant à produire, à partir d'une séquence temporelle de sorties depuis l'écran tactile, une séquence temporelle d'enregistrements correspondante, chaque enregistrement étant représentatif d'un ensemble respectif de coordonnées non corrigées de l'objet et d'une distance de passage respective de l'objet ;
une mémoire servant a stocker une séquence temporelle des enregistrements ;
un premier algorithme servant à comparer les distances de passage respectives associées avec deux ou plus parmi les enregistrements, et à déterminer si la magnitude associée avec un ensemble d'enregistrements en cours d'acquisition n'est pas au moins une quantité sélectionnée supérieure à la magnitude associée avec un autre ensemble d'enregistrements quelconque stocké dans la mémoire pour ainsi sélectionner l'enregistrement ayant une distance de passage la plus proche associée à ceux-ci ;
un deuxième algorithme servant à calculer, à partir de l'ensemble non corrigé respectif de coordonnées associées avec l'enregistrement ayant la distance du passage le plus proche et à partir d'au moins un autre enregistrement stocké dans la mémoire, une correction qui, une fois appliquée aux coordonnées non corrigées associées avec l'enregistrement ayant la distance du passage le plus proche, fournit un ensemble de coordonnées corrigées ; et
un ordinateur servant à exécuter au moins les premier et deuxième algorithmes et à fournir l'ensemble de coordonnées corrigées comme sortie.

6. Système selon la revendication 5 dans lequel les circuits servant à produire la pluralité d'enregistrements comportent un moyen de filtrage de signal.

7. Système selon la revendication 5 ou 6 dans lequel les circuits servant à produire la pluralité d'enregistrements comportent des circuits de détermination de position XY ainsi que des circuits de détermination d'amplitude.

8. Système selon l'une quelconque des revendications 5 à 7 dans lequel le deuxième algorithme comporte une analyse de régression.

9. Appareil pour déterminer un ensemble de coordonnées d'un point du passage le plus proche d'une partie de pointage d'un objet par rapport à un écran tactile capacitif, la partie de pointage de l'objet étant plus proche de l'écran que le reste de l'objet, l'appareil comprenant :
des circuits d'acquisition de signal servant à recevoir une séquence temporelle d'ensembles de signaux analogiques depuis l'écran tactile capacitif et à fournir comme sortie une séquence temporelle correspondante d'ensembles de signaux numériques, chacun des ensembles de signaux numériques ayant une magnitude respective qui lui est associée ;
une mémoire servant à recevoir la séquence temporelle d'ensembles de signaux numériques et à stocker au moins un parmi les ensembles de signaux numériques ;
un moyen de logique de détermination de détection ayant la séquence temporelle d'ensembles de signaux numériques comme entrée, la logique de détermination de détection fournissant un signal de déclenchement comme sortie lorsque la magnitude associés avec l'un des ensembles de signaux numériques n'est pas au moins une quantité sélectionnée supérieure à la magnitude associée avec l'ensemble immediatement précédent de signaux numériques dans la séquence temporelle de ceux-ci, et
un moyen de traitement du signal ayant des entrées respectives à partir de la mémoire et à partir du moyen de logique de détermination de détection, un moyen de traitement du signal qui agit en réponse au signal de déclenchement afin de calculer, à partir de l'ensemble de signaux numériques qui n'est pas au moins une quantité sélectionnée supérieure à la magnitude associée avec l'ensemble immédiatement précédent de signaux numériques, et à partir d'au moins un autre ensemble de signaux numériques stocké dans la mémoire, les coordonnées du point de passage le plus proche.

10. Appareil selon la revendication 9 dans lequel un microcontrôleur comporte le moyen de logique de détermination de détection et le moyen de traitement du signal.

11. Appareil selon la revendication 9 ou 10 dans lequel le moyen de logique de détermination de détection et le moyen de traitement du signal comportent des circuits respectifs de calcul de logique câblée.

12. Appareil selon la revendication 9, 10 ou 11 dans lequel un ordinatenr analogique comporte le moyen de logique de détermination de détection et le moyen de traitement du signal.
